# EUROPÄISCHE PATENTSCHRIFT

(11) **EP 2 841 250 B1**
(45) Veröffentlichungstag und Bekanntmachung des Hinweises auf die Patenterteilung: **18.09.2019**
(21) Anmeldenummer: 12816458.9
(22) Anmeldetag: 21.12.2012
(51) Int. Cl.: B29B 7/48, B29B 7/72, B29B 7/82, B29B 7/84, B29B 7/52, B29K 105/00, B01F 7/00, B01F 15/00, B01F 15/06, B29C 48/25, B29C 48/425, B29C 48/435, B29C 48/465, A23P 30/20

(54) **BETRIEB EINER EXTRUSIONSANLAGE MIT EINEM PLANETWALZENEXTRUDER**
OPERATION OF AN EXTRUSION LINE WITH A PLANETARY ROLLER EXTRUDER
FONCTIONNEMENT D'UNE LIGNE D'EXTRUSION AVEC UNE EXTRUDEUSE À ROULEAUX PLANÉTAIRES

(30) Priorität: 26.04.2012 DE 102012008170
(43) Veröffentlichungstag der Anmeldung: 04.03.2015
(73) Patentinhaber: Entex Rust & Mitschke GmbH, 44805 Bochum (DE)
(72) Erfinder: RUST, Harald, 44805 Bochum (DE)
(74) Vertreter: Kaewert, Klaus
(86) Internationale Anmeldenummer: PCT/EP2012/005318
(87) Internationale Veröffentlichungsnummer: WO 2013/159801

(56) Entgegenhaltungen:
- EP-A1- 2 251 406
- CN-U- 202 162 989
- DE-A1- 10 356 627
- DE-A1- 19 939 077
- JP-A- H11 198 214
- US-A1- 2007 173 622
- "High-quality extrusion with planetary rollers", PLASTICS ENGINEERING,, Bd. 44, Nr. 1, 1. Januar 1988 (1988-01-01) , Seiten 30-32, XP001353820,
- HUÃ MANN J: "Dynamischer Schmelzemischer fÃ 1/4 r die Extrusionstechnik", KUNSTSTOFFE,, Bd. 73, Nr. 7, 1. Juli 1983 (1983-07-01), Seiten 347-348, XP001353817,

## Beschreibung

### Beschreibung

Die Erfindung betrifft einen Betrieb einer Extrusionsanlage mit einem Planetwalzenextruder nach dem Oberbegriff des Anspruches 1. Planetwalzenextruder sind spezielle Extruder. Extruder dienen vorzugsweise der Verarbeitung von Kunststoff. Planetwalzenextruder eignen sich aber auch zur Verarbeitung von Lebensmitteln und anderen Stoffen geeignet, die in eine schmelzflüssige Form überführt werden können oder bereits schmelzflüssig in den Extruder eingeführt werden.
Die Verarbeitung schließt häufig die Vermischung mit Feststoffen ein.
Dabei wird Kunststoff zumeist in Granulatform zusammen mit Zuschlägen in den Extruder eingesetzt. Die Einsatzmischung wird im Extruder plastifiziert, dispergiert, homogenisiert, anschließend auf Extrusionstemperatur abgekühlt und im schmelzflüssigen Zustand wieder ausgetragen. Die Austragdüse wird als Extruderwerkzeug bezeichnet.
Es kommt auch vor, daß ohne Düse extrudiert wird. Die Düse wird auch als Extrusionswerkzeug bezeichnet. Die Düse ist dem Querschnitt des gewünschten Extrusionsstranges nachgebildet. Das heißt, die Düse gibt der Schmelze eine Form. Der Extrusionsstrang wird an der Umgebungsluft und/oder mit anderen Kühlmitteln so weit abgekühlt, daß die Schmelze erstarrt und der Extrusionsstrang eine bleibende Form eingenommen hat. Bis zum Erreichen ausreichender Festigkeit an den Außenflächen wird der Extrusionsstrang vorzugsweise mit sogenannten Kalibratoren an den Außenflächen gestützt.
Es gibt diverse Anwendungen, in denen das Extrusionswerkzeug entbehrlich ist. Das ist zum Beispiel der Fall, wenn in mehren Stufen extrudiert. Wenn nur eine Stufe vorgesehen ist, spricht man von einem Primärextruder, der die in ihm erzeugte und vorzugsweise darüber hinaus bearbeitete Schmelze an den Sekundärextruder übergibt. Zwischen beiden Stufen ist häufig eine Entgasung der Schmelze vorgesehen. Dazu ist der Übergabebereich dann eingehaust. In dem Übergabegehäuse wird ein Unterdruck gegenüber dem Schmelzedruck in dem Primärextruder erzeugt, so daß eingeschlossenes Gas aus der Schmelze ausgast. Das angefallene Gas wird mittels einer geeigneten Saugvorrichtung aus dem Übergabegehäuse abgezogen.
Zu den Extrusionsvorgängen, bei denen ein Extrusionswerkzeug entbehrlich ist, gehört auch die Erzeugung von Farbrohstoffen, wenn die Schmelze aus dem Extruder zur Abkühlung auf ein Plattenband aufgegeben wird, um nach der Verfestigung in einem Brecher/Mahlwerk auf die gewünschte Korngröße gebracht zu werden.
Häufig kommen kommen Extruder ohne Extrusionswerkzeug vor, wenn die Extruder zum Beispiel die Aufgabe haben, Schmelze zu erzeugen und gegebenenfalls aufzubereiten, um die Schmelze anschließend in einen anderen Extruder einzupressen, wo die Schmelze mit anderen Stoffen vermischt wird.

Der Planetwalzenextruder hat gegenüber anderen Extruderformen beim Plastifizieren, Homogenisieren und Abkühlen erhebliche Vorteile.

Deshalb gewinnt der Planetwalzenextruder zunehmende Bedeutung. Dabei kommen kombinierte Bauweisen häufig vor. Planetwalzenextruderabschnitte werden mit Einschneckenextruderabschnitten kombiniert. Vorzugsweise finden die Einschneckenextruderabschnitte im Materialeinzug oder am Extruderaustrag Anwendung.
Oder die Planetwalzenextruderabschnitte werden mit Abschnitten anderer Bauart kombiniert.

Wenn die Planetwalzenextruderabschnitte modular geplant sind bzw. modular gefertigt werden, spricht man von Planetwalzenextrudermodulen, auch von Planetwalzenmodulen. Die Module vereinfachen die Planung und Fertigung.

Zumeist werden auch solchermaßen kombinierte Extruderanlagen als Planetwalzenextruder bezeichnet, weil der Planetwalzenextruderabschnitt als prägend für die Anlage angesehen wird.

Seine besondere Wirkungsweise gewinnt der Planetwalzenextruder durch seinen Aufbau und die Wirkungsweise seiner Einzelteile. Kern des Planetwalzenextruders ist eine Zentralspindel, die mit einer Vielzahl von Planetenspindeln (Planetwalzenspindeln) kämmt. Zumeist handelt es sich um 6 bis 12 Planetenspindeln. Die Zahl der Planetenspindeln steht in der Regel im Zusammenhang mit dem Extruderdurchmesser. Bei größeren Extruderdurchmessern kommen auch wesentlich mehr als 12 Planetenspindeln vor.

Die Planetenspindeln kämmen zugleich mit der Innenverzahnung einer umgebenden Gehäusebuchse bzw. mit einer Innenverzahnung des Gehäuses. Während der Drehung der Zentralspindel laufen die Planetenspindeln um die Zentralspindel um.

Die Einsatzmischung wird zwischen der Zentralspindel, den Planetenspindeln und der Buchse in extremer Weise bearbeitet. Die Bearbeitung ist intensiv, weil das Extrusionsgut zwischen den Planetwalzenextruderteilen entsprechend der Anzahl der Planetenspindeln und deren Eingriffe mit der Zentralspindel und der Gehäuseverzahnung vielfach und dünn ausgewalzt wird. Infolgedessen entstehen extrem umfangreiche Berührungen mit der Schmelze.
Zugleich ist die Bearbeitung des Extrusionsgutes im Planaetwalzenextruder besonders schonend, weil die Molekülketten nicht oder nur minimal geschert werden.

Die Zentralspindel wird in axialer Richtung durch Lager gehalten, welche die Axialkräfte aufnehmen. Die Planetenspindeln laufen gegen einen in Strömungsrichtung der Schmelze am Ende der Planetenspindeln angeordneten Anlaufring. Sie gleiten mit ihren Stirnflächen entlang der Stirnfläche des Anlaufrings.

Die Planetwalzenextruder sind aufwendiger als andere Extruder wie z.B. als Einschneckenextruder und Doppelschneckenextruder. Die Planetwalzenextruder haben es deshalb trotz erheblicher Verfahrensvorteile schwer, sich gegenüber Einschneckenextrudern und Doppelschneckenextrudern durchzusetzen.

Der Erfindung liegt die Aufgabe zugrunde, die Planetwalzenextruder für die Anwendung in bestimmten Verfahren noch attraktiver zu machen. Nach der Erfindung wird das dadurch erreicht, daß die Drehzahl der Zentralspindel gegenüber üblichen Drehzahlen wesentlich erhöht wird. Nach der Erfindung ist wahlweise eine Erhöhung der Drehzahl um mindestens das 2fache oder mindestens das 3fache oder mindestens das 4fache oder mindestens das 5fache oder mindestens das 6fache gegenüber der üblichen Drehzahl vorgesehen. Mit der erfindungsgemäßen Erhöhung der Drehzahl wird die Dispergierung von Mischungsanteilen in der Schmelze extrem gesteigert. Das ist für die Verarbeitung von Lebensmitteln, für die chemische Industrie (z.B. für die Verteilung der Reaktionspartner oder für die Verteilung von Hilfsmitteln für die gewünschte Reaktion), für die Herstellung von Farben und das Einfärben von Schmelzen, für die Kunststoffindustrie (z.B. für die Verteilung von Vernetzungsmitteln im Kunststoff) und für die Herstellung von Klebstoffen von Vorteil.

Die üblichen Drehzahlen von Planetwalzenextrudern sind baugrößenabhängig. Je größer die Baugröße, desto geringer sind die üblichen Drehzahlen. Die Baugröße wird hier anhand des Teilkreisdurchmessers der Innenverzahnung des Gehäuses bzw. anhand des Teilkreisduchmessers der Innenverzahnung der Gehäusebuchse angegeben. Zugleich kann zwischen Standard-Planetwalzenextruder, Sonder-Planetwalzenextrudern und Planetwalzenextrudern in schwerer Ausführung unterschieden werden. Zeitgemäße Planetwalzenextruder besitzen eine Evolventenverzahnung an den verzahnten und miteinander kämmenden Teilen. Die Verzahnung ist in DIN 867 festgelegt. Der wichtigste Faktor der Evolventenverzahnung ist der Zahnmodul. Der Zahnmodul, Zähnezahl und der Teilkreisdurchmesser der Verzahnung bestimmen die Zahnform. Nur Zahnräder gleichen Moduls sollen miteinander kämmen. Der Teilkreisdurchmesser der Gehäuseinnenverzahnung bzw. der Gehäusebuchseninnenverzahnung bestimmt die Baugröße.

Folgende Baugrößen in Millimeter (mm) für Standard-Planetwalzenextruder kommen bisher vor:

| Baugröße | Zahnmodul | max. Drehzahl der Zentralspindel |
|---|---|---|
| 70mm | 2,5 | 220Upm(Umdrehungen pro Minute) |
| 100mm | 3 | 220Upm |
| 120mm | 3 | 220 |
| 150mm | 3 | 115 |
| 180mm | 3,5 | 80 |
| 200mm | 3 bis 3,5 | 80 |
| 250mm | 3 | 80 |
| 300mm | 3,5 | 80 |
| 400mm | 3,5 | 80 |

Folgende Baugrößen in schwerer Ausführung der Planetwalzenextruder kommen bisher vor:

| Baugröße | Zahnmodul | max. Drehzahl der Zentralspindel |
|---|---|---|
| 280mm | 5,5 | 80 |
| 300mm | 5,5 | 80 |
| 400mm | 5,5 | 80 |
| 500mm | 5,5 | 80 |

Nicht alle Hersteller von Planetwalzenextrudern bieten wie die Anmelderin sämtliche vorstehend aufgelisteten Baugrößen an.
*Die* EP2251406A1 *weist einerseits auf unterschiedliche Baugrößen bei Planetwalzenextrudern und andererseits auf Drehzahlen hin, welche zwischen 100 und 300 Upm liegen Dabei weis der Fachmann, daß die Drehzahlen umso geringer sind, je größer die der Planetwalzenextruder ist. Das heißt, die 300 Upm entsprechen der kleinsten Baugröße, die 100 Upm der größten Baugröße. Ein Vergleich mit obiger Übersicht über übliche Drehzahlen in Abhängigkeit von der Baugröße ergibt, daß die* EP2251406A1 *dem wiedergegebenen bisherigen Stand der Technik entspricht. Auch die Veröffentlichung "*High-quality extrusion with planetary rollers" in Plastics Engineering, Bd.44, Nr. 1 vom 1. Jan. 1988, Seiten 30 bis 32 *geht nicht über diesen Stand der Technik hinaus. Dort sind lediglich 25Upm als Drehzahl zu entnehmen.*
*Auch die* CN202162989U *geht nicht über den beschriebenen Stand der Technik hinaus, Dort sind gar keine Drehzahlen genannt. Auch die* JPH11198214 *geht nicht über den beschriebenen Stand der Technik hinaus. Dort sind für eine Baugröße 80mm Umdrehungszahlen von 100 und 140 angegeben.*
*Auch die* DE10356627A1 *geht hinsichtlich der Drehzahlen nicht über den beschriebenen Stand der Technik hinaus. Dort sind gar keine Drehzahlen genannt. Vielmehr befaßt sich die Druckschrift mit einem besonderen Antrieb, welcher bei ganz kleinen Drehzahlen ein hohes Drehmoment vermittelt.*
*Auch die* US-Anmeldung 2007/0173622A1 *geht nicht über den beschriebenen Stand der Technik hinaus. Dort ist nur eine Baugröße von 70mm genannt. Drehzahlen sind nicht ersichtlich.*
*Auch die* DE19939077A1 *geht nicht über den beschriebenen Stand der Technik hinaus. Dort ist lediglich ein Extruder mit einer Baugröße von 70mm und Drehzahlen bis 110Upm genannt, wobei die Drehzahl unter stufenloser Verstellung erreicht werden kann.*
*Schließlich ist auch der Veröffentlichtung "*Dynamischer Schmelzemischer für die Extrusionstechnik" in Kunststoffe 73 (1983)No. 7, Seite 347,348 *kein weitergehender Stand der Technik zu entnehmen. Dort findet sich für die Baugröße 60 eine Drehzahl von 85Upm.*

Die erfindungsgemäße Drehzahlerhöhung bezieht sich auf die in vorstehender Aufstellung angegebene Maximaldrehzahl. Daraus ergeben sich dann mit der erfindungsgemäßen Vervielfachung neue Drehzahlen für die Zentralspindel. Die Drehzahl der um die Zentralspindel in dem Gehäuse umlaufenden Planetspindeln ist in Abhängigkeit von dem Übersetzungsverhältnis von Zentralspindel zu den Planetspindeln noch um ein Vielfaches höher. Der Fachmann weiß, daß die Belastungen von sich drehenden Teilen mit größer werdender Drehzahl exponential zunehmen. Zugleich ist zu berücksichtigen, daß die Planetenspindel nur eine sehr "bescheidene" Lagerung zwischen der Zentralspindel und der Innenverzahnung des Gehäuses haben. Diese Lagerung hat ein Spiel, welches um ein Vielfaches größer als das Spiel einer durchschnittlichen Wellenlagerung ist. Hinzu kommt, daß die Planetenspindeln auf ihrer Länge unterschiedlich belastet werden. Das resultiert aus der unterschiedlichen Beschaffenheit des Extrusionsgutes und aus der unterschiedlichen Verteilung des Extrusionsgutes im Planetwalzenextruder. Die unterschiedliche Beschaffenheit ergibt sich daraus, daß in Förderrichtung des Extruders am Anfang in der Regel Feststoffe gemeinsam in den Extruder eingetragen werden, die dann bei dem weiteren Transport durch den Extruder in der Schmelze verteilt werden. Die Mischung mit den Feststoffen hat eine andere Zähigkeit/Viskosität als das Schmelzegemisch am Extruderende.
Die unterschiedliche Füllung ergibt sich daraus, daß Planetwalzenextruder nie vollständig mit Extrusionsgut gefüllt sind, Vorzugsweise beträgt der Füllungsgrad höchstens 90%, noch weiter bevorzugt höchstens 80% und höchst bevorzugt höchstens 70%. Zugleich ist die Förderwirkung des Planetwalzenextruders zu berücksichtigen. Dies führt dazu, daß das Extrusionsgut in Richtung der Austrittsöffnung des Extruders gefördert wird. Das Hohlraumvolumen liegt dann im wesentlichen eintrittsseitig. Das führt zu unterschiedlichen Kräften, die an den Planetenspindeln an unterschiedlichen Stellen angreifen. Der Fachmann muß fürchten, daß die Planetwalzenteile der zunehmenden Belastung aus einer erhöhten Drehzahl nicht mehr standhalten und Planetenspindeln sogar aus der Verzahnung springen und zerstört werden bzw. die Verzahnung der anderen Planetwalzenteile beschädigen. Das sind die Bedenken, die einer erfindungsgemäßen Erhöhung der Drehzahl entgegen stehen. Überraschenderweise erhöht sich weder die Schadenshäufigkeit noch der Schadensumfang durch Erhöhung der Drehzahl.

Durch erfindungsgemäße Vervielfachung/Erhöhung der Drehzahl führt zu folgenden Werten:

**Standard:**

| Baugröße | mindestens erf. Drehzahl der Zentralspindel in Upm |
|---|---|
| 70mm | 440 oder 660 oder 880 oder 1100 oder 1320 oder 1560 |
| 100mm | 440 oder 660 oder 880 oder 1100 oder 1320 oder 1560 |
| 120mm | 440 oder 660 oder 880 oder 1100 oder 1320 oder 1560 |
| 150mm | 230 oder 345 oder 460 oder 575 oder 690 oder 805 |
| 180mm | 160 oder 240 oder 320 oder 400 oder 480 oder 560 |
| 200mm | 160 oder 240 oder 320 oder 400 oder 480 oder 560 |
| 250mm | 160 oder 240 oder 320 oder 400 oder 480 oder 560 |
| 300mm | 160 oder 240 oder 320 oder 400 oder 480 oder 560 |
| 400mm | 160 oder 240 oder 320 oder 400 oder 480 oder 560 |

**Schwere Ausführung:**

| | |
|---|---|
| Baugröße | 160 oder 240 oder 320 oder 400 oder 480 oder 560 |
| 280mm | 160 oder 240 oder 320 oder 400 oder 480 oder 560 |
| 300mm | 160 oder 240 oder 320 oder 400 oder 480 oder 560 |
| 400mm | 160 oder 240 oder 320 oder 400 oder 480 oder 560 |
| 500mm | 160 oder 240 oder 320 oder 400 oder 480 oder 560 |

Soweit Sonder-Planetwalzenextruder mit anderen Baugrößen bestehen oder angefertigt werden, bauen diese Extruder auf den vorstehend aufgelisteten bekannten Baugrößen für Planetwalzenextrudern auf. Die abweichenden Baugrößen liegen dann zwischen bekannten, oben aufgelisteten Baugrößen. Die Basis für die erfindungsgemäße Drehzahl für eine abweichende Baugröße bildet dann die maximale Drehzahl derjenigen oben aufgelisteten Baugröße, welche der anderen Baugröße am nächsten kommt. Am Beispiel einer anderen Baugröße von 170 mm heißt das: die nächstliegende oben aufgelistete Baugröße ist die Baugröße von 180mm mit einer bisherigen maximalen Drehzahl von 80Upm. Dann bilden diese 80Upm die Basis für die erfindungsgemäße Vervielfachung/Erhöhung der Drehzahl.
Sofern die abweichende Baugröße genau zwischen zwei bekannten oben aufgelisteten Baugrößen liegt, soll die maximale Drehzahl der nächst kleineren oben aufgelisteten Baugröße die Basis für die maximale Drehzahl der abweichenden Baugröße bilden. Am Beispiel einer Baugröße 350mm heißt das: die nächstkleinere aufgelistete Baugröße ist die Baugröße von 300mm mit einer bisherigen maximalen Drehzahl von 80 Upm. Dann bilden diese 80Upm die Basis für die erfindungsgemäße Vervielfachung der Drehzahl.
Die erfindungsgemäße Vervielfachung/Erhöhung der Drehzahl ist so gewählt, daß andere Einflußgrößen(zum Beispiel Zahnmodul) als die Baugröße vernachlässigt werden können.

Die bisher üblichen Drehzahlen von Planetwalzenextrudern liegen zum Teil weit unter den oben aufgelisteten maximalen Drehzahlen, zumeist zwischen 30 und 60Upm.
Dabei sind die Antriebe in der Regel in etwa auf die gewünschten Drehzahlen ausgelegt, so daß einer Erhöhung der Drehzahlen mit den vorhandenen Antrieben erhebliche Grenzen gesetzt sind.

Die Drehzahl bekannter Schnecken in Einschneckenextrudern und Doppelschneckenextrudern kann um Einiges höher sein als die der Planetwalzenextruder. Gleichwohl können diese Drehzahlen nicht als Vorlage für die Planetwalzenextruder verwendet werden. Der Fachmann weiß, daß die Planetwalzenextruder weder mit Einschneckenextrudern noch mit Doppelschneckenextrudern vergleichbar sind. Zum Beispiel findet sich in einem Doppelschneckenextruder zwischen beiden Schnecken nur ein für die Mischung des Materials wichtiger Materialknet. Bei einem Planetwalzenextruder mit zum Beispiel 12 Planetenspindeln finden sich 24 Materialknete zwischen den Planetenspindeln und der Zentralspindel und zwischen den Planetspindeln und dem umgebenden Gehäuse. Grob betrachtet kann ein Planetwalzenextruder mit 12 Planetenspindeln soviel leisten wie 24 Doppel schneckenextruder.
Außerdem weiß der Fachmann, daß die um die Zentralspindel in dem umgebenden Gehäuse umlaufenden Planetenspindeln allein mit Ihrer Verzahnung in der Verzahnung der Zentralspindel und in der Verzahnung des Gehäuses *geführt* sind. Im Gegensatz dazu sind die Einschnecken sicher in ihrem umgebenden Gehäuse und den zugehörigen Lagern gehalten. Entsprechendes gilt für die Schnecken von Doppelschneckenextrudern. Der Fachmann muß fürchten, daß die alleinige Halterung der umlaufenden Planetenspindeln mit ihren Zähnen in der Verzahnung der Zentralspindel bzw. in der Gehäuseverzahnung nicht für hohe Drehzahlen geeignet ist. Überraschenderweise ist die Gefahr von Betriebsstörungen bei Überschreiten bisher üblicher Maximaldrehzahlen nicht viel größer als bei herkömmlichem Betrieb der Planetwalzenextruder mit niedrigerer Drehzahl, wenn eine Mindestfüllung des Planetwalzenextruders sicher gestellt ist. Die Mindestfüllung soll nach Überschreiten der herkömmlichen Maximaldrehzahl erfindungsgemäß 6%, vorzugsweise 12%, noch weiter bevorzugt 18% und höchst bevorzugt 24% sein. Die Prozentangabe bezieht sich auf das Hohlraumvolumen im Extruder. Dabei handelt es sich um das Volumen des Gehäuseinnenraumes, welches nicht durch Einbauteile(Zentralspindel, Planetenspindeln, Anlaufringe und andere Ringe) ausgefüllt ist. Die Füllung ist der Anteil des im Gehäuse vorhandenen Extrusionsgutes (zum Beispiel: Kunststoffe_mit Füllstoffen und anderen Zuschlägen).
Bei üblicher Füllung während des Extrusionsbetriebes ist die erfindungsgemäß geforderte Mindestfüllung in aller Regel gegeben. Anders ist die Situation beim Leerfahren der Anlage. Das Leerfahren kommt beim Anfahren und beim Stillsetzen der Anlage vor. Ferner kommt ein Leerfahren bei einem Materialwechsel (zum Beispiel: das Extrusionsgut soll anders eingefärbt werden) oder beim Säubern des Extruders(zum Beispiel: bei Betriebsende wird schmelzflüssiger Kunststoff aus dem Extruder herausgefahren, der sonst verfestigt und der Wiederinbetriebnahme außerordentliche Schwierigkeiten bereitet)vor. Beim Säubern werden darüber hinaus Reinigungsmittel/Reinigungsgranulat eingesetzt, um die mit dem Extrusionsgut in Berührung kommenden Flächen zu reinigen). Nach der Erfindung soll
beim Anfahren vor Überschreiten der oben genannten üblichen Drehzahlen eine erfindungsgemäße Mindestfüllung des Hohlraumes im Planetwalzenextruder erreicht werden bzw.
beim Stillsetzen bis zum Unterschreiten der oben genannten üblichen Drehzahlen eine erfindungsgemäße Mindestfüllung des Extruders eingehalten werden bzw.
vor dem Leerfahren des Extruders für einen Materialwechsel eine Reduktion der Drehzahl auf die oben genannten üblichen Drehzahlen erfolgen und während der Drehzahlreduzierung der Mindestfüllungsgrad des Extruders gewahrt werden.

Die im Extruder zu verarbeitende Mischung wird häufig allein über den oben erläuterten Materialeinzug in den Extruder eingetragen. Darüber hinaus kann es von Vorteil sein, Mischungsanteile in flüssiger bzw. schmelzflüssiger Form später in den Extruder einzutragen. Das geschieht dann vorzugsweise über Injektionsringe, welche zwischen Extruderabschnitten angeordnet sind. Dabei wird die übliche Bauart von Extruderabschnitten genutzt, bei der die Gehäuse der Extruderabschnitte mit Flanschen versehen sind. An den Flanschen werden die Gehäuse der Extruderabschnitte gegeneinander verspannt. Dabei können die Injektionsringe zwischen den Flanschen positioniert werden. Die genaue Zentrierung der Injektionsringe kann zugleich dadurch bewirkt werden, daß die Injektionsringe ganz oder teilweise in ein Gehäuseende eingelassen sind. Vorzugsweise sind die Injektionsringe teilweise in beide gegenüberliegenden Gehäuseenden eingelassen. Dadurch kann der Injektionsring wahlweise zugleich als Zentrierring genutzt werden.
Im Übrigen ist es von Vorteil, wenn die Injektionsringe zugleich den Anlaufring für die Planetspindeln des
Planetwalzenextruderabschnitts/Moduls bilden und/oder zugleich einen Anschluß für eine Temperaturmeßeinrichtung, vorzugsweise einen Temperaturfühler, und/oder für eine Druckmeßvorrichtung/Druckmeßfühler besitzen.

Soweit nach der Dispergierung und Homogenisierung der Schmelze in dem Planetwalzenextruder eine Entgasung erforderlich ist, kann es von Vorteil sein, die Planetspindeln im Bereich der gewünschten Entgasung mit einer geringeren Mischwirkung zu versehen, um dem Gas mehr und bessere Gelegenheit zum Austritt aus der Schmelze zu geben. Im Planetwalzenextruder kann das durch Reduzierung der Spindelzahl und/oder durch spezielle Ausbildung der Planetspindeln bewirkt werden. Eine in Betracht kommende spezielle Ausbildung ist die Reduzierung der Zähnezahl an den Planetspindeln.
Wahlweise kann dem Planetwalzenextrudermodul in einer Extruderanlage auch ein Einschneckenextruderabschnitt/Modul zur Entgasung nachgeordnet werden. Dann kann sich die Zentralspindel des Planetwalzenextrudermoduls als Einschnecke in dem nachgeordneten Einschneckenextrudermodul fortsetzen.
Wahlweise wird das Extrusionsgut auch in einen drehzahlunabhängig von dem Planetwalzenextruder antreibbaren Einschneckenextruder eingespeist. Dann kann dieser nachgeordnete Einschneckenextruder mit geringerer Geschwindigkeit laufen, so daß das Extrusionsgut vor dem Austritt aus der Anlage optimal entgasen kann.
Soweit noch an anderer Stelle der Extrusionsanlage, zum Beispiel am Füllteil und/oder an einem anderen Extruderabschnitt/Modul und/oder zwischen verschiedenen Extruderabschnitten/Modulen eine Entgasung vorgesehen ist, können alle Entgasungsstellen gemeinsam an eine Gasentsorgung angeschlossen sein. Vorzugsweise befindet sich in der Gasentsorgung eine Pumpe, mit der in den Entgasungsleitungen ein Unterdruck erzeugt werden kann. Von Vorteil ist dabei, alle Entgasungsleitungen zu beheizen, damit Schmelzpartikel die Entgasungsleitung nicht zusetzen, welche von dem austretenden Gas mitgerissen werden.
Soweit noch an anderer Stelle der Extrusionsanlage, zum Beispiel am Füllteil und/oder an einem anderen Extruderabschnitt/Modul und/oder zwischen verschiedenen Extruderabschnitten/Modulen eine Entgasung vorgesehen ist, können dafür Ringe eingesetzt werden, welche wie die Injektionsringe mehrere Funktionen besitzen. Das schließt die Funktion als Anlaufring und/oder den Anschluß für Druckmeßeinrichtungen und/oder für Temperaturmeßeinrichtungen und/oder für die Zentrierung der Gehäuse ein.

Nach der Erfindung finden zur Erhöhung der Drehzahlen vorzugsweise Torquemotoren Anwendung. Der Torquemotor ist ein hochpoliger, elektrischer Direktantrieb. Torquemotoren besitzen ein großes Drehmoment. Das heißt ein Getriebe entfällt. Die Drehzahl wird allein elektrisch geregelt.

Das hohe Drehmoment ist für die Planetwalzenextruder günstig, insbesondere für die Planetwalzenextruder größerer Baugröße und schwerer Ausführung. Auf der anderen Seite sind diese Motoren großvolumiger als herkömmliche Motoren. Das Mehr-Volumen wird häufig nur teilweise durch den Wegfall des sonst üblichen Getriebes kompensiert.
Den Torquemotoren wird überdies nur ein geringer Wirkungsgrad gegenüber herkömmlichen Motoren zugebilligt. Dabei gibt es unterschiedliche Meinungen, ob der Wirkungsgradverlust durch den Wegfall des Getriebes und den damit verbundenen Gewinn an Energie, welche sonst vom Getriebe aufgezehrt wird, kompensiert wird oder nicht. Jedenfalls überwiegen die Meinungen bei weitem, welche insgesamt zu einem Wirkungsgradverlust kommen. Diese Diskussion über den Wirkungsgrad ist keine Empfehlung für die Anwendung der Torquemotoren.
Torquemotoren finden bislang dann Anwendung, wenn es auf eine hohe Verfahrgenauigkeit ankommt. Dann ist der Energieverbrauch von untergeordneter Bedeutung.
Für einen Planetwalzenxtruder ist die Verfahrgenauigkeit während des Betriebes ohne Bedeutung.
Allerdings kann die Verfahrgenauigkeit beim Einbau und Ausbau bzw. Wechsel der Planetspindeln sehr hilfreich sein. Mit dem genauen Fahrweg können die Planetspindeln nach Entfernen des Anlaufringes ohne übliche händische Hilfe teilweise aus dem Gehäuse herausgefahren werden, ohne daß - wie bei anderen Antrieben - die Gefahr besteht, daß die Planetspindeln herausschießen und Mannschaften und Gerät zu Schaden kommen. Sobald die Planetspindeln aus dem Gehäuse weit genug vorragen, können die Planetspindeln von Hand erfaßt und zwischen Gehäuse und Zentralspindel herausgedreht werden. Beim Einbau verläuft der Vorgang in umgekehrter Richtung und ergeben sich entsprechende Vorteile.
Gleichwohl sind Torquemotore für ohnehin schon aufwendigen Planetwalzenextruder bisher noch nicht zur Anwendung gekommen.
Das mag daran liegen, daß nicht erkannt worden ist, wie mit Hilfe der Torquemotoren der Ein- und Ausbau der Planetspindeln erleichtert werden kann.

Spätestens bei den Kosten für die Torquemotoren zuckt der Fachmann zurück.
Die Kosten für Torquemotoren sind in der Regel um das 1,5 bis 2,5fache höher als die Kosten herkömmlicher Antriebe.
Gleichwohl hat die Erfindung Torquemotoren für die Erhöhung der Drehzahlen ausgewählt.

Torquemotoren kommen in verschiedenen Bauarten vor,
als permanenterregte (bürstenlose) Gleichstrommotore
als geschaltete Reluktanzmotoren
als Asynchronmotoren
als Außenläufer(Stator innen, Rotor außen) mit dem Vorteil besonders hohen Drehmomentes
als Innenläufer (Stator außen, Rotor innen)

Vorzugsweise findet die Bauart "Außenläufer" für die erfindungsgemäße Erhöhung der Drehzahl Anwendung. Desgleichen eine Wasserkühlung für die Motore. Günstig ist, wenn der Planetwalzenextruder gleichermaßen eine Wasserkühlung besitzt, die dann mit der Motorkühlung zusammengefaßt werden kann.

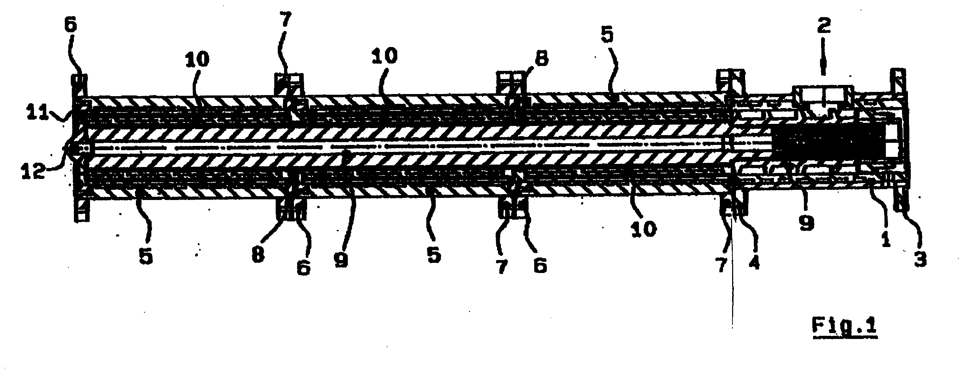

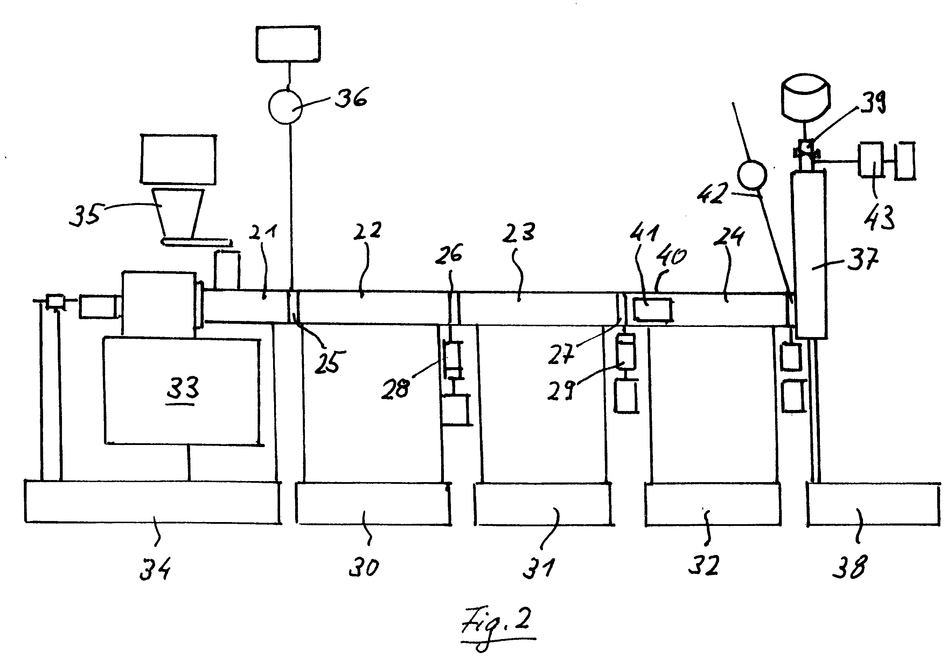

In der Zeichnung ist ein Ausführungsbeispiel der Erfindung dargestellt. Fig. 1 zeigt einen aus der DE 19721808 bekannten Aufbau von Planetwalzenextrudern, Fig. 2 zeigt einen Aufbau für eine erfindungsgemäße Drehzahlerhöhung.

Fig. 1 zeigt einen Extruder mit überlangem Planetwalzenteil 11 und einer Einlaufschnecke 1. Der Planetwalzenteil setzt sich aus drei Planetwalzenextrudermodulen mit einer gemeinsamen Zentralspindel 9 zusammen. Jeder Modul besteht aus einem äußeren Gehäuse 5 in Rohrform, das an beiden Enden Flansche 6 und 7 aufweist. An den Flanschen 6 und 7 sind die Module miteinander verschraubt. Dabei werden die Gehäuse 5 durch Zentrierringe zentriert. Die Zentrierringe sind in entsprechenden Ausnehmungen der Gehäuseflansche eingelassen.

Zu jedem Planetwalzenextrudermodul gehört auch eine Buchse. Die Buchse sitzt innen im Gehäuse 5. Das geschieht vorzugsweise vor der Verschraubung der Flansche 6 und 7 eingeschoben werden. Dazu sind die Zentrierringe mit einer Bohrung versehen, die gleich der Gehäusebohrung ist.

Zwischen den Buchsen sitzt jeweils ein Anlaufring 8. Der Anlaufring hält die Planetenspindeln 10 in ihrer Umlaufposition um die gemeinsame Zentralspindel 9. Dabei gleiten die Planetenspindeln an dem Anlaufring.

Die Spitze der Zentralspindel ist mit 12 bezeichnet und korrespondiert mit einem vorderen Anlaufring 11, der die gleiche Funktion wie die Anlaufringe 8 hat und darüber hinaus einen Spalt bildet, durch den das extrudierte Material in Richtung des Extruderaustrages gedrückt wird.

Zur Zentrierung des Anlaufringes 11 sind spezielle Zentrierringe vorgesehen, die mit dem Gehäuse 5 fest verbunden sind. Die Zentrierringe füllen einerseits die Ausnehmung im Flansch 6 aus, der für die Zentrierringe bestimmt ist. Andererseits bilden die Zentrierringe frontseitig einen zusätzlichen Zentrierflansch.

Am rechten Ende bildet die Zentralspindel 9 eine Schnecke für eine Einlaufzone. In diesem Bereich ist ein separates Gehäuse 1 mit einer Einlauföffnung 2 vorgesehen. Das Gehäuse 1 ist aufgebaut wie das Gehäuse 5. Die zugehörigen Flansche sind mit 3 und 4 bezeichnet. Das Zusammenwirken des Flansches 4 mit dem Anschlußflansch 7 des nächsten Gehäuses 5 ist das gleiche wie das Zusammenwirken der Flansche 6 und 7. Die Füllschnecke am rechten Teil der Zentralspindel hat eine Füllfunktion und eine Plastifizierungsfunktion, aber keine wesentliche Dispergierungsfunktion und Homogenisierungsfunktion.
Die Dispergierung und Homogeniesierung erfolgt in nachgeordneten Planetwalzenextrudermodulen

Jedes Gehäuse 5 eines Planetwalzenextrudermoduls ist mit zwei Kühlstrecken/Beheizungsstrecken versehen. Zu der einen Strecke gehören spiralförmig an der Gehäuseinnenfläche verlaufende Kanäle, die über Anschlüsse mit einem Kühl-/Beheizungsmedium beschickt werden können. Zur anderen Strecke gehören spiralförmig verlaufende Kanäle an der Gehäuseinnenfläche, die über Anschlüsse mit Kühlmittel/Beheizungsmittel beschickt werden können.

Jedes Planetwalzenextrudermodul ist im Ausführungsbeispiel 400 mm lang, so daß sich eine Gesamtlänge von 1200mm ergibt.

Beide Planetwalzenextrudermodul sind in nicht dargestellter Weise so abgestützt, daß *keine* den Betrieb *störende* Durchbiegung *erfolgt*
Jedes Planetwalzenextrudermodul besitzt 9 Planetenspindeln.

Nach Fig. 2 besitzt eine erfindungsgemäße Extruderanlage im Ausführungsbeispiel gleichfalls drei Planetwalzenextruderabschnitte/Module 22, 23, 24. Alle Abschnitte/Module sind von einer gemeinsamen Zentralspindel wie nach Fig. 1 durchdrungen, besitzen Gehäuse mit Buchsen, Kühlung und Innenverzahnung wie nach Fig. 1 und Planetenspindeln, die wie nach Fig. 1 innen im Gehäuse und außen an der Zentralspindel umlaufen. Die Gehäuse der Abschnitte/Module sind wie nach Fig. 1 mit Flanschen versehen, an denen die Gehäuse gegeneinander verspannt werden.

Alle Abschnitte/Module besitzen nach Fig. 2 eine Länge von jeweils 400 mm, so daß sich für die drei Abschnitte/Module eine Gesamtlänge von 1200mm ergibt. Es handelt sich um Abschnitte/Module mit einer Baugröße von 70mm(Teilkreisdurchmesser der Gehäuseverzahnung). Die Anzahl der Planetenspindeln beträgt in jedem der Abschnitte sechs. Dabei hat die Hälfte der Planetenspindeln eine um 20mm geringere Länge als die andere Hälfte der Planetenspindeln. Im Ausführungsbeispiel besitzen die Planetenspindeln des Abschnittes/Moduls 22 eine Standardausführung, d.h. eine Verzahnung, welche sich über die gesamte Spindellänge erstreckt.

Die Planetenspindeln in den Abschnitten/Modulen 23 und 24 besitzen eine Ausführung als Igel. Die Igelausführung entsteht, wenn die Planetenspindeln nach Erreichen einer Standardausführung mit einer zusätzlichen Verzahnung versehen werden, welche quer zu der Verzahnung bei der Standardausführung verläuft. Bei der zusätzlichen Verzahnung werden zahnbildende Nuten in die nach der Standardverzahnung entstandenen Zähne eingearbeitet, in der Regel gedreht oder gefräst. Die Nuten der zusätzlichen Verzahnung verursachen Öffnungen in den zahnbildenden Stegen, welche nach der Standardverzahnung verbleiben. So entstehen an den Planetenspindeln Erhebungen, welche im Groben als Stacheln eines Igels bezeichnet werden können. Daraus ist die Bezeichnung Igelverzahnung abgeleitet.

Die Abschnitte/Module können in anderen Ausführungen ganz andere Längen aufweisen. Das gleiche gilt für die Baugröße und die Planetenspindeln.

Es können auch Spindeln zum Einsatz kommen, bei denen im Vergleich zu anderen Spindeln ein Zahn oder mehrere Zähne fehlen. Diese Spindeln werden im Folgenden als TT-Spindeln bezeichnet.

Noch andere Ausführungsbeispiele besitzen Planetspindeln, mit
Standardverzahnung und Igelverzahnung oder
Standardverzahnung und TT-Verzahnung oder
Igelverzahnung und TT-Verzahnung.

In Durchgangsrichtung des Extrusionsgutes ist den Planetwalzenextruderabschnitten/Modulen ein Füllteil 21 vorgeordnet. Das Füllteil besitzt die Bauart eines Einschneckenextruders. Die in seinem Gehäuse vorgesehene Schnecke ist vorzugsweise einteilig mit der Zentralspindel für die Planetwalzenextruderabschnitte/Module. In anderen Ausführungsbeispielen sind mehrteilige Zentralspindeln vorgesehen.. Eine vorteilhafte Ausführung mehrteiliger Zentralspindeln sieht eine sich mittig durch die Zentralspindel erstreckende Zugstange vor, auf der eine

Vielzahl von außen verzahnten Hülsen sitzen. Diese Hülsen werden mit der Zugstange miteinander verspannt. Es ist von Vorteil, wenn diese Hülsen an den Stoßstellen miteinander verzahnt sind. Das erleichtert die Verspannung der Hülsen und stellt sicher, daß im Falle einer zu geringen Verspannung keine Verdrehung der Hülsen gegeneinander stattfindet.
Diese Bauform erlaubt es, einzelne oder mehrere Hülsen auszuwechseln, die einem besonderen Verschleiß ausgesetzt sind oder durch unvorhergesehene Umstände beschädigt worden sind. Die übrigen Hülsen verbleiben. Das reduziert die Kosten. Das gilt besonders für den Fall komplizierter Verzahnungsstellen. Kompliziert wird die Verzahnung bei einem Wechsel der Verzahnung *an einer Planetspindel,* zum Beispiel bei einem Wechsel von der Normalverzahnung zur Igelverzahnung oder zur TT-Verzahnung.

Außerdem eröffnet diese Bauweise eine vorteilhafte Vorratshaltung von außen verzahnten, auf eine Zugstange aufschiebbaren und miteinander verspannbaren Zentralspindel-Hülsen. Die Hülsen können wahlweise den zugehörigen Extruderabschnitten/Modulen angepaßt sein.
Das heißt, die Hülsen können die gleiche Länge, eine größere Länge oder eine kleinere Länge als die zugehörigen Module aufweisen. Die Hülsen können sich dabei zu mehreren auf eine Maß ergänzen, das gleich der Länge eines Moduls ist.

Die vorstehend beschriebene Hülsentechnik kann auch das Füllteil des Extruders einschließen. Das Füllteil.dient zum Eintragen des Extrusionsgutes in den Extruder. Das Füllteil ist zumeist in Einschneckenexdtruderbauweise gestaltet. Bei Anwendung der Hülsentechnik auf ein Einschneckenextruder-Modul als Füllteil gehören eine oder mehrere, auf der Zugstange mit anderen Hülen anderer Module verspannbare Hülsen zu dem Füllteil. Diese Hülsen sind außen als Schnecke ausgebildet. Sofern mehrere Hülsen für ein Füllteil vorgesehen sind, die gemeinsam die Schnecke bilden, so bildet jede Hülse außen einen Teil der Schnecke und bilden alle für das Füllteil bestimmten Hülsen gemeinsam die Schnecke des Füllteiles. Dabei kommt zu den oben anhand der Hülsen für eine Zentralspindel erläuterten Vorteile noch hinzu, daß auch Wechsel in der Verzahnung wie beispielsweise Veränderung in der Zahntiefe oder Abstandsänderungen zwischen den Zähnen bzw. den die Zähne bildenden Stegen erleichtert werden. Solche Änderungen sind zum Beispiel volumenerweiternd zweckmäßig, um die Rahmenbedingungen für eine Entgasung zu schaffen. Volumenverringernde Änderungen sind dagegen zur Druckerhöhung im Füllteil zweckmäßig.

In weiteren Ausführungsbeispielen ist ein Einschneckenextruder-Modul am Austragende des Extruders vorgesehen. Dieser Modul dient zur Erhöhung des Austragsdruckes, wenn der bis dahin erlangte Schmelzedruck für eine ausreichende Formgebung in einem Extrusionswerkzeug ungenügend ist.

Das Füllteil 21 besitzt im Ausführungsbeispiel einen Trichter, über dem ein gravimetrisch arbeitendes Dosierwerk angeordnet ist.

Die Zentralspindel/Schnecke wird mit einem Torquemotor 33 angetrieben.

Im Ausführungsbeispiel wird pulverförmiger Füllstoff in das Füllteil 21 aufgegeben. Zwischen dem Füllteil 21 und dem Planetwalzenextruderabschnitt 22 ist ein Injektionsring 25 vorgesehen. Über diesen Ring wird schmelzflüssiger Kunststoff eingedüst. Der notwendige Druck wird mit einer Pumpe 36 aufgebaut. Der schmelzflüssige Kunststoff kann aus einem Vorratsbehälter/Puffer abgezogen werden oder mittels eines Seitenarmextruders aus Kunststoffgranulat erzeugt werden. Dabei kann das Granulat ein Compound sein und mehrere Bestandteile enthalten. Es können die neben dem Kunststoff vorgesehenen Materialien aber auch zusammen mit dem Kunststoffgranulat in den Seitenarmextruder aufgegeben werden, um dort zu einer schmelzflüssigen Mischung verarbeitet zu werden.

Zwischen den Planetwalzenextruderabschnitten/Modulen 22 und 23 einerseits und 23 und 24 andererseits sind gleichfalls Ringe 26, 27 vorgesehen. Im Ausführungsbeispiel dienen die Ringe 26, 27 der Druckmessung und Temperaturmessung. Die zugehörigen Geräte sind mit 28 und 29 bezeichnet.

In den Planetwalzenextruderabschnitten/Modulen werden die Mischungsanteile ineinander dispergiert und homogenisiert. Dabei dreht sich die Zentralspindel während des Betriebes mit 500 oder 800 Upm. Das bewirkt eine Feinstverteilung der Mischungsanteile ineinander.

Von dem Planetwalzenextruderabschnitt/Modul 24 wird die Schmelze in einen Entgasungsextruder 37 übergeben, der als Einschneckenextruder ausgebildet ist und drehzahlunabhängig von den Planetwalzenextruderabschnitten/Modulen angetrieben wird. Dabei wird die Drehzahl der zugehörigen Einschnecke so weit reduziert, daß das eingeschlossene Gas vorteilhaft entweichen kann und mittels einer Saugpumpe und Saugleitung 42 abgezogen werden kann.
Im Anschluß an die Entgasung wird der Druck wieder ausreichend erhöht, um die Schmelze durch eine Düse 39 aus dem Extruder 37 auszutragen. Am Austrag sind Temperatur- und Druckmeßeinrichtungen 43 vorgesehen.

Ferner ist eine weitere Entgasungsmöglichkeit am Planetwalzenextruderabschnitt/Modul 24 gestrichelt dargestellt und mit 40 bezeichnet.
Außerdem zeigt der Planetwalzenextruderabschnitt/Modul 24 einen wahlweise benutzbaren Anschluß 41 für einen zusätzlichen seitlichen Materialeintrag.

Die Extruderanlage ist mit einer Kühlanlage versehen, welche aus Elementen 30,31,32,34,38 besteht und unabhängige Temperaturführungen in den Planetwalzenextruderabschnitten/Modulen und dem Füllteil, dem Motor sowie der austragseitigen Einschnecke erlaubt.

## Patentansprüche

1. *Betrieb einer* Extrusionsanlage mit einem Planetwalzenextruder oder Planetwalzenextruderabschnitt oder Planetwalzenextrudermodul mit einer Zentralspindel, Planetenspindeln und einer innen verzahnten Gehäusebuchse bzw. einem innen verzahnten Gehäuse, wobei die Planetenspindeln (20) mit den in Richtung des Schmelzestromes vorderen Stirnflächen an einem Anlaufring (23) gleiten und dabei um die Zentralspindel und in dem umgebenden Gehäuse umlaufen und wobei deren Verzahnung zugleich mit der Verzahnung der Zentralspindel und der Innenverzahnung des Gehäuses kämmt,
*wobei die Zentralspindel in Abhängigkeit von der Baugröße in mm bewegt wird,*
*wobei die Baugröße anhand des Teilkreisdurchmessers der innen verzahnten Gehäusebuchse bzw. des innen verzahnten Gehäuses angegeben wird,* **dadurch gekennzeichnet, dass** die Zentralspindel in Abhängigkeit von der Baugröße in mm mindestens mit folgender Drehzahl in Upm bewegt wird:
| | |
|---|---|
| 70mm | 440 Upm |
| 100mm | 440 |
| 120mm | 440 |
| 150mm | 230 |
| 180mm | 160 |
| 200mm | 160 |
| 250mm | 160 |
| 280mm | 160 |
| 300mm | 160 |
| 400mm | 160 |
| 500mm | 160 |
*wobei ein Mindestfüllungsgrad von 6% im Extruder eingehalten wird, wobei der Füllungsgrad sich auf den Hohlraum des Extruders bezieht, der nicht durch die Zentralspindel, die Planetspindeln, die Anlaufringe und sonstige Ringe ausgefüllt ist und wobei die Füllung durch das Extrusionsgut gebildet wird.*

2. *Betrieb einer* Extrusionsanlage nach Anspruch 1,
**dadurch gekennzeichnet, dass** die Zentralspindel in Abhängigkeit von der Baugröße in mm mit mindestens folgender Drehzahl in Upm bewegt wird:
| | |
|---|---|
| 70mm | 660 Upm |
| 100mm | 660 |
| 120mm | 660 |
| 150mm | 345 |
| 180mm | 240 |
| 200mm | 240 |
| 250mm | 240 |
| 280mm | 240 |
| 300mm | 240 |
| 400mm | 240 |
| 500mm | 240 |

3. *Betrieb einer* Extrusionsanlage nach Anspruch 2, **dadurch gekennzeichnet, dass** die Zentralspindel in Abhängigkeit von der Baugröße in mm mit mindestens folgender Drehzahl in Upm bewegt wird,
| | |
|---|---|
| 70mm | 880 Upm |
| 100mm | 880 |
| 120mm | 880 |
| 150mm | 460 |
| 180mm | 320 |
| 200mm | 320 |
| 250mm | 320 |
| 280mm | 320 |
| 300mm | 320 |
| 400mm | 320 |
| 500mm | 320 |

4. *Betrieb einer* Extrusionsanlage nach Anspruch 3, **dadurch gekennzeichnet, dass** die Zentralspindel in Abhängigkeit von der Baugröße in mm mit mindestens folgender Drehzahl in Upm bewegt wird,
| | |
|---|---|
| 70mm | 1100 Upm |
| 100mm | 1100 |
| 120mm | 1100 |
| 150mm | 575 |
| 180mm | 400 |
| 200mm | 400 |
| 250mm | 400 |
| 280mm | 400 |
| 300mm | 400 |
| 400mm | 400 |
| 500mm | 400 |

5. *Betrieb einer* Extrusionsanlage nach Anspruch 4, **dadurch gekennzeichnet, dass** die Zentralspindel in Abhängigkeit von der Baugröße in mm mit mindestens folgender Drehzahl in Upm bewegt wird:
| | |
|---|---|
| 70mm | 1320 Upm |
| 100mm | 1320 |
| 120mm | 1320 |
| 150mm | 690 |
| 180mm | 480 |
| 200mm | 480 |
| 250mm | 480 |
| 280mm | 480 |
| 300mm | 480 |
| 400mm | 480 |
| 500mm | 480 |

6. *Betrieb einer* Extrusionsanlage nach Anspruch 5, **dadurch gekennzeichnet, dass** die
Zentralspindel in Abhängigkeit von der Baugröße in mm mit mindestens folgender Drehzahl in Upm bewegt wird:
| | |
|---|---|
| 70mm | 1560 Upm |
| 100mm | 1560 |
| 120mm | 1560 |
| 150mm | 805 |
| 180mm | 560 |
| 200mm | 560 |
| 250mm | 560 |
| 280mm | 560 |
| 300mm | 560 |
| 400mm | 560 |
| 500mm | 560 |

7. *Betrieb einer* Extrusionsanlage nach einem der Ansprüche 1 bis 6, **dadurch gekennzeichnet, dass** *beim Anlaufen des Extruders und beim Stillsetzen des Extruders während des Durchlaufens folgender* Mindestdrehzahl in Upm der Zentralspindel in Abhängigkeit von der Baugröße in mm
| | |
|---|---|
| 70mm | 220 Upm |
| 100mm | 220 |
| 120mm | 220 |
| 150mm | 115 |
| 180mm | 80 |
| 200mm | 80 |
| 250mm | 80 |
| 280mm | 80 |
| 300mm | 80 |
| 400mm | 80 |
| 500mm | 80 |
eine Mindestfüllung von vorzugsweise 12%, noch weiter bevorzugt von 18% und höchst bevorzugt von 24% eingehalten wird.

8. *Betrieb einer* Extrusionsanlage nach einem der Ansprüche 1 bis 7, **gekennzeichnet durch** die Verwendung eines nachgeordneten Entgasungsextruders, vorzugsweise eines als Einschneckenextruder ausgebildeten Entgasungsextruder, mit einem Antrieb, der von dem Antrieb des Planetwalzenextruders drehzahlunabhängig ist.

9. *Betrieb einer* Extrusionsanlage nach einem der Ansprüche 1 bis 8, **gekennzeichnet durch** Verwendung eines Torquemotors als Antrieb.

10. *Betrieb einer* Extrusionsanlage nach Anspruch 9, **gekennzeichnet durch** die *Verwendung* eines Torquemotor mit einem Außenläufer *als Antrieb.*

11. *Betrieb einer* Extrusionsanlage nach Anspruch 9 oder 10, **gekennzeichnet durch** die *Verwendung* eines Torque-Motor mit Wasserkühlung.

12. *Betrieb einer* Extrusionsanlage nach einem der Ansprüche 9 bis 11, **gekennzeichnet durch** Anschluß der Kühlung des Torquemotors an eine gemeinsame Kühlanlage mit den Planetwalzenextruderabschnitten und/oder mit anderen Teilen der Extruderanlage.

13. *Betrieb einer* Extrusionsanlage nach einem der Ansprüche 1 bis 12, **gekennzeichnet durch** die Anwendung auf Lebensmittel.

14. *Betrieb einer* Extrusionsanlage nach einem der Ansprüche 1 bis 12, **gekennzeichnet durch** die Anwendung auf die Mischung chemischer Reaktionspartner oder auf die Einmischung von Reaktionshilfsmitteln.

15. *Betrieb einer* Extrusionsanlage nach einem der Ansprüche 1 bis 12, **gekennzeichnet durch** die Anwendung auf die Herstellung von Farben.

## Claims

1. Operation of an extruder line having a planetary roller extruder or a planetary roller extruder section or a planetary roller extruder module with a central spindle, planetary spindles and an internal toothed housing liner or an internal toothed housing, wherein the planetary spindles (20) slide with the front surfaces in the melt flow direction at a stop ring (23) and thereby rotate around the central spindle and in the surrounding housing, wherein their toothing meshes simultaneously with the toothing of the central spindle and the internal toothing of the housing,
wherein the central spindle is moved as a function of the constructional size in mm,
wherein the construction size is defined by the pitch diameter of the internal toothed housing liner or the internal toothed housing,
**characterised in that** the central spindle is moved at least with the following rotational speed in rpm as a function of the constructional size in mm:
| | |
|---|---|
| 70 mm | 440 rpm |
| 100 mm | 440 |
| 120 mm | 440 |
| 150 mm | 230 |
| 180 mm | 160 |
| 200 mm | 160 |
| 250 mm | 160 |
| 280 mm | 160 |
| 300 mm | 160 |
| 400 mm | 160 |
| 500 mm | 160 |
wherein a minimum filling degree of 6% is maintained in the extruder, wherein the filling degree relates to the free space in the extruder which is not taken up by the central spindle, the planetary spindles, the thrust rings and other rings, and wherein the filling is formed by the extrusion material.

2. Operation of an extrusion line according to claim 1,
**characterised in that** the central spindle is moved at least with the following rotational speed in rpm as a function of the constructional size in mm:
| | |
|---|---|
| 70 mm | 660 rpm |
| 100 mm | 660 |
| 120 mm | 660 |
| 150 mm | 345 |
| 180 mm | 240 |
| 200 mm | 240 |
| 250 mm | 240 |
| 280 mm | 240 |
| 300 mm | 240 |
| 400 mm | 240 |
| 500 mm | 240 |

3. Operation of an extrusion line according to claim 2, **characterised in that** the central spindle is moved at least with the following rotational speed in rpm as a function of the constructional size in mm:
| | |
|---|---|
| 70 mm | 880 rpm. |
| 100 mm | 880 |
| 120 mm | 880 |
| 150 mm | 460 |
| 180 mm | 320 |
| 200 mm | 320 |
| 250 mm | 320 |
| 280 mm | 320 |
| 300 mm | 320 |
| 400 mm | 320 |
| 500 mm | 320 |

4. Operation of an extrusion line according to claim 3, **characterised in that** the central spindle is moved at least with the following rotational speed in rpm as a function of the constructional size in mm:
| | |
|---|---|
| 70 mm | 1100 rpm |
| 100 mm | 1100 |
| 120 mm | 1100 |
| 150 mm | 575 |
| 180 mm | 400 |
| 200 mm | 400 |
| 250 mm | 400 |
| 280 mm | 400 |
| 300 mm | 400 |
| 400 mm | 400 |
| 500 mm | 400 |

5. Operation of an extrusion line according to claim 4, **characterised in that** the central spindle is moved at least with the following rotational speed in rpm as a function of the constructional size in mm:
| | |
|---|---|
| 70 mm | 1320 rpm. |
| 100 mm | 1320 |
| 120 mm | 1320 |
| 150 mm | 690 |
| 180 mm | 480 |
| 200 mm | 480 |
| 250 mm | 480 |
| 280 mm | 480 |
| 300 mm | 480 |
| 400 mm | 480 |
| 500 mm | 480 |

6. Operation of an extrusion line according to claim 5, **characterised in that** the central spindle is moved at least with the following rotational speed in rpm as a function of the constructional size in mm:
| | |
|---|---|
| 70 mm | 1560 rpm |
| 100 mm | 1560 |
| 120 mm | 1560 |
| 150 mm | 805 |
| 180 mm | 560 |
| 200 mm | 560 |
| 250 mm | 560 |
| 280 mm | 560 |
| 300 mm | 560 |
| 400 mm | 560 |
| 500 mm | 560 |

7. Operation of an extrusion line according to one of claims 1 to 6, **characterised in that** a minimum filling of preferably 12%, even more preferably 18% and most preferably 24% during the flow is maintained when starting up the extruder and when shutting down the extruder, the following minimum speed in rpm of the central spindle as a function of the constructional size in mm being:
| | |
|---|---|
| 70 mm | 220 rpm |
| 100 mm | 220 |
| 120 mm | 220 |
| 150 mm | 115 |
| 180 mm | 80 |
| 200 mm | 80 |
| 250 mm | 80 |
| 280 mm | 80 |
| 300 mm | 80 |
| 400 mm | 80 |
| 500 mm | 80 |

8. Operation of an extrusion line according toone of claims 1 to 7, **characterised by** the use of a downstream degassing extruder, preferably a degassing extruder designed as a single-screw extruder, with a drive that is rotationally independent of the drive of the planetary roller extruder.

9. Operation of an extrusion line according to one of claims 1 to 8, **characterised by** the use of a torque motor as the drive.

10. Operation of an extrusion line according to claim 9, **characterised by** the use of a torque motor with an external rotor as the drive.

11. Operation of an extrusion line according to claim 9 or 10, **characterised by** the use of a torque motor with water cooling.

12. Operation of an extrusion line according to one of claims 9 to 11, **characterised by** the connection of the cooling of the torque motor to a cooling unit that is commonto the planetary roller extruder sections and/or other parts of the extruder line.

13. Operation of an extrusion line according to one of claims 1 to 12, **characterised by** the application to foodstuffs.

14. Operation of an extrusion line according to one of claims 1 to 12, **characterised by** the application to blend chemical reaction partners or to blend in reaction auxiliaries.

15. Operation of an extrusion line according to one of claims 1 to 12, **characterised by** the application to produce colours.

## Revendications

1. Fonctionnement d'une ligne d'extrusion avec une extrudeuse à rouleaux planétaires ou section d'extrudeuse à rouleaux planétaires ou module d'extrudeuse à rouleaux planétaires, comportant une broche centrale, des broches planétaires et une douille de boîtier à denture intérieure ou un boîtier à denture intérieure, les broches planétaires (20) glissant avec les faces frontales avant, en direction du flux de masse fondue, au niveau d'une bague de roulement (23), et tournant autour de la broche centrale et dans le boitier entourant et dont la denture s'engrène en même temps avec la denture de la broche centrale et la denture intérieure du boitier, la broche centrale étant déplacée en fonction de la taille en mm, la taille étant indiquée au moyen du diamètre primitif de la douille de boîtier à denture intérieure ou du boitier à denture intérieure, **caractérisé en ce que** la broche centrale est déplacée en fonction de la taille en mm au moins avec la vitesse de rotation suivante en tr/min :
| | |
|---|---|
| 70 mm | 440 tr/min |
| 100 mm | 440 |
| 120 mm | 440 |
| 150 mm | 230 |
| 180 mm | 160 |
| 200 mm | 160 |
| 250 mm | 160 |
| 280 mm | 160 |
| 300 mm | 160 |
| 400 mm | 160 |
| 500 mm | 160 |
un taux de remplissage minimal de 6 % étant respecté dans l'extrudeuse, le taux de remplissage se référant à l'espace creux de l'extrudeuse, qui n'est pas rempli par la broche centrale, les broches planétaires, la bague de roulement et autres bagues, et le remplissage étant formé par le produit d'extrusion.

2. Fonctionnement d'une ligne d'extrusion selon la revendication 1, **caractérisé en ce que** la broche centrale est déplacée en fonction de la taille en mm avec au moins la vitesse de rotation suivante en tr/min :
| | |
|---|---|
| 70 mm | 660 tr/min |
| 100 mm | 660 |
| 120 mm | 660 |
| 150 mm | 345 |
| 180 mm | 240 |
| 200 mm | 240 |
| 250 mm | 240 |
| 280 mm | 240 |
| 300 mm | 240 |
| 400 mm | 240 |
| 500 mm | 240. |

3. Fonctionnement d'une ligne d'extrusion selon la revendication 2, **caractérisé en ce que** la broche centrale est déplacée en fonction de la taille en mm avec au moins la vitesse de rotation suivante en tr/min :
| | |
|---|---|
| 70 mm | 880 tr/min |
| 100 mm | 880 |
| 120 mm | 880 |
| 150 mm | 460 |
| 180 mm | 320 |
| 200 mm | 320 |
| 250 mm | 320 |
| 280 mm | 320 |
| 300 mm | 320 |
| 400 mm | 320 |
| 500 mm | 320. |

4. Fonctionnement d'une ligne d'extrusion selon la revendication 3, **caractérisé en ce que** la broche centrale est déplacée en fonction de la taille en mm avec au moins la vitesse de rotation suivante en tr/min :
| | |
|---|---|
| 70 mm | 1100 tr/min |
| 100 mm | 1100 |
| 120 mm | 1100 |
| 150 mm | 575 |
| 180 mm | 400 |
| 200 mm | 400 |
| 250 mm | 400 |
| 280 mm | 400 |
| 300 mm | 400 |
| 400 mm | 400 |
| 500 mm | 400. |

5. Fonctionnement d'une ligne d'extrusion selon la revendication 4, **caractérisé en ce que** la broche centrale est déplacée en fonction de la taille en mm avec au moins la vitesse de rotation suivante en tr/min :
| | |
|---|---|
| 70 mm | 1320 tr/min |
| 100 mm | 1320 |
| 120 mm | 1320 |
| 150 mm | 690 |
| 180 mm | 480 |
| 200 mm | 480 |
| 250 mm | 480 |
| 280 mm | 480 |
| 300 mm | 480 |
| 400 mm | 480 |
| 500 mm | 480. |

6. Fonctionnement d'une ligne d'extrusion selon la revendication 5, **caractérisé en ce que** la broche centrale est déplacée en fonction de la taille en mm avec au moins la vitesse de rotation suivante en tr/min :
| | |
|---|---|
| 70 mm | 1560 tr/min |
| 100 mm | 1560 |
| 120 mm | 1560 |
| 150 mm | 805 |
| 180 mm | 560 |
| 200 mm | 560 |
| 250 mm | 560 |
| 280 mm | 560 |
| 300 mm | 560 |
| 400 mm | 560 |
| 500 mm | 560. |

7. Fonctionnement d'une ligne d'extrusion selon l'une des revendications 1 à 6, **caractérisé en ce que**, l'extrudeuse en marche et l'extrudeuse à l'arrêt, pendant le passage de la vitesse de rotation minimale suivante en tr/min de la boche centrale en fonction de la taille en mm :
| | |
|---|---|
| 70 mm | 220 tr/min |
| 100 mm | 220 |
| 120 mm | 220 |
| 150 mm | 115 |
| 180 mm | 80 |
| 200 mm | 80 |
| 250 mm | 80 |
| 280 mm | 80 |
| 300 mm | 80 |
| 400 mm | 80 |
| 500 mm | 80. |
un remplissage minimal de préférence 12 %, mieux encore de 18 % et de manière préférée entre toutes de 24 % est respecté.

8. Fonctionnement d'une ligne d'extrusion selon l'une des revendications 1 à 7, **caractérisé par** l'utilisation d'une extrudeuse à décharge de gaz, placée en aval, de préférence d'une extrudeuse à décharge de gaz réalisée en tant qu'extrudeuse mono-vis, avec un entraînement qui n'est pas fonction de la vitesse de rotation de l'entraînement de l'extrudeuse à rouleaux planétaires.

9. Fonctionnement d'une ligne d'extrusion selon l'une des revendications 1 à 8, **caractérisé par** l'utilisation d'un moteur-couple en tant qu'entrainement.

10. Fonctionnement d'une ligne d'extrusion selon la revendication 9, **caractérisé par** l'utilisation d'un moteur-couple doté d'un induit extérieur en tant qu'entrainement.

11. Fonctionnement d'une ligne d'extrusion selon la revendication 9 ou 10, **caractérisé par** l'utilisation d'un moteur-couple avec refroidissement à eau.

12. Fonctionnement d'une ligne d'extrusion selon l'une des revendications 9 à 11, **caractérisé par** le raccordement du refroidissement du moteur-couple au niveau d'une installation de refroidissement commune, avec les sections de l'extrudeuse à rouleaux planétaires et/ou avec d'autres parties de la ligne d'extrusion.

13. Fonctionnement d'une ligne d'extrusion selon l'une des revendications 1 à 12, **caractérisé par** l'application sur des denrées alimentaires.

14. Fonctionnement d'une ligne d'extrusion selon l'une des revendications 1 à 12, **caractérisé par** l'application sur le mélange de partenaires réactifs chimiques, ou sur le mélange d'auxiliaires de réaction.

15. Fonctionnement d'une ligne d'extrusion selon l'une des revendications 1 à 12, **caractérisé par** l'application sur la fabrication de couleurs.
